# EUROPEAN PATENT APPLICATION

(11) **EP 4 787 060 A1**
(43) Date of publication of application: **05.08.2026**
(21) Application number: 24871525.2
(22) Date of filing: 07.08.2024
(51) Int. Cl.: G02B 30/56

(54) **THIN AERIAL IMAGE DISPLAY DEVICE AND NON-CONTACT INPUT APPARATUS USING SAME**

(30) Priority: 28.09.2023 JP 2023168513
(71) Applicant: Asukanet Company, Ltd., Hiroshima-shi, Hiroshima 731-0138 (JP)
(72) Inventor: OTSUBO, Makoto, Hiroshima-shi, Hiroshima 731-0138 (JP)
(74) Representative: Vossius & Partner Patentanwälte Rechtsanwälte mbB
(86) International application number: PCT/JP2024/028341
(87) International publication number: WO 2025/069723

(57) **Abstract**

A non-contact input apparatus 10 is composed of:
(a) a thin aerial image display device 11 including: an optical image formation means 18 formed in a shape of a flat plate having a light entrance surface 16 and a light exit surface 17 that are arranged in parallel to each other, the optical image formation means including a plurality of first light reflecting surfaces and a plurality of second reflecting surfaces that are formed at a right angle respectively with respect to the light entrance surface 16 and the light exit surface 17 and arranged in parallel to each other at predetermined intervals, the first and second light reflecting surfaces being arranged orthogonally to each other in a planar view; and a flat-plate-shaped display 20 arranged on a side of the light entrance surface 16 of the optical image formation means 18, and having a light-emitting surface 19 parallel to the light entrance surface 16, the thin aerial image display device displaying an aerial image 12 on an image formation surface 21 inclined with respect to the light exit surface 17 at an angle α on a side of the light exit surface 17 of the optical image formation means 18; and
(b) a detector means 14 that is attached to the thin aerial image display device 11, and detects a position of an indicator means 13 that touches the aerial image 12.

## Description

### TECHNICAL FIELD

The present invention relates to a thin aerial image display device and a non-contact input apparatus using the same, the thin aerial image display device being configured to display an aerial image based on an image on a flat-plate-shaped display arranged in parallel to a light entrance surface of an aerial image formation means including a plurality of band-shaped first and second light reflecting surfaces (mirror surfaces) that are respectively arranged in parallel to each other, for example, at predetermined intervals, the plurality of first and second light reflecting surfaces being arranged orthogonally to each other in a planar view.

### BACKGROUND ART

As a device that uses light (scattered light) emitted from a surface of a body (object), to form a stereoscopic image (aerial image, i.e., real image) of the body in the air, for example, a stereoscopic image formation device (optical image formation device) disclosed in Patent Literature 1 is known. This image formation device includes first and second light control panels formed by arranging, inside two transparent flat plates, light reflecting surfaces, which are formed of many band-shaped metal reflecting surfaces, perpendicularly respectively to one-side surfaces of the transparent flat plates at a predetermined pitch. One-surface sides of the first and second light control panels are made to face and tightly adhere to each other such that the light reflecting surfaces of the first and second light control panels are orthogonal to each other. In the optical image formation device, as shown in FIGS. 3, 5, and 6 in Patent Literature 1, a body image M' or N' that is formed in the air is generated at a position symmetrical to a body M or N across the optical image formation device. The same is true for a case where a display device such as a display is installed instead of the body M or N, and an aerial image of the image displayed on the display device is formed. Therefore, in also a non-contact input apparatus using this optical image formation device, as shown in FIG. 2 in Patent Literature 2, for example, an angle "a" formed by a display appliance that displays an image and an optical image formation means is equal to an angle "a" formed by the optical image formation means and a space image formed in a space.

### CITATION LIST

### Patent Literatures

[Patent Literature 1] WO 2009/131128
[Patent Literature 2] Registered Utility Model No. 3219968

### SUMMARY OF THE INVENTION

### TECHNICAL PROBLEM

Thus, in both of the optical image formation device in Patent Literature 1 and the non-contact input apparatus in Patent Literature 2, in order to form an aerial image in an inclined manner (make the aerial image float) in a space above the optical image formation device based on the image displayed on the display device, the display device has to be installed in an inclined manner below the optical image formation device, which requires a large installation space. Thus, the optical image formation device and the non-contact input apparatus are large and lack in installation flexibility, and such factors have resulted in a hindrance to spreading of the optical image formation device and the non-contact input apparatus.

The present invention has been achieved in view of such circumstances, and has an object to provide a thin aerial image display device and a non-contact input apparatus using the same, which enable a clear aerial image to be formed despite their thin designs, and which are excellent in space saving and installation flexibility.

### SOLUTION TO PROBLEM

A thin aerial image display device according to the first invention that meets the above-described object includes an optical image formation means formed in a shape of a flat plate having a light entrance surface and a light exit surface that are arranged in parallel to each other, the optical image formation means including: a plurality of first light reflecting surfaces formed at a right angle with respect to the light entrance surface and arranged in parallel to each other at predetermined intervals; and a plurality of second light reflecting surfaces formed at a right angle with respect to the light exit surface and arranged in parallel to each other at predetermined intervals, the first light reflecting surfaces and the second light reflecting surfaces being arranged orthogonally to each other in a planar view, the thin aerial image display device having an image formation surface inclined with respect to the light exit surface at an angle α on a side of the light exit surface.

When an image display means, which has a display surface for displaying an image at a position symmetrical to the image formation surface across the optical image formation means, is virtually arranged on a side of the light entrance surface of the optical image formation means, the thin aerial image display device reproduces light, which is emitted from the display surface toward the light entrance surface of the optical image formation means, by a flat-plate-shaped display arranged on the side of the light entrance surface of the optical image formation means and having a light-emitting surface parallel to the light entrance surface, and forms, on the image formation surface, an aerial image corresponding to the image by light reflected once by the first light reflecting surfaces and successively reflected once by the second light reflecting surfaces among light emitted from the light-emitting surface toward the light entrance surface of the optical image formation means.

In the thin aerial image display device according to the first invention, the light-emitting surface of the flat-plate-shaped display is preferably composed of a plurality of light-emitting elements arranged in a grid pattern.

In the thin aerial image display device according to the first invention, a center axis of light emitted from each of the light-emitting elements is preferably perpendicular to the display surface of the image display means.

In the thin aerial image display device according to the first invention, a directional angle of light emitted from each of the light-emitting elements is preferably within 40 degrees.

In the thin aerial image display device according to the first invention, the light-emitting elements are preferably micro LEDs.

A non-contact input apparatus according to the second invention that meets the above-described object uses the thin aerial image display device according to the first invention, and includes: the thin aerial image display device; and a detector means that is attached to the thin aerial image display device and detects a position of an indicator means that touches the aerial image.

In the non-contact input apparatus according to the second invention, the detector means is preferably arranged in parallel to a lower side of the aerial image.

In the non-contact input apparatus according to the second invention, the detector means preferably includes a light-emitting portion and a light-receiving portion, the light-emitting portion emitting detection light in a direction parallel to the aerial image and forming a detection surface parallel to the aerial image, the light-receiving portion receiving reflection light reflected from the indicator means when the indicator means touches the detection surface at a position overlapping the aerial image in a front view.

### ADVANTAGEOUS EFFECTS OF INVENTION

A thin aerial image display device according to the first invention can include an image formation surface inclined with respect to a light exit surface of an optical image formation means at an angle α on a side of the light exit surface, based on light that is emitted from a flat-plate-shaped display, which has a light-emitting surface parallel to a light entrance surface of the optical image formation means, toward the light entrance surface. Such a thin aerial image display device is very compact and excellent in installation flexibility.

In the thin aerial image display device according to the first invention, when the light-emitting surface of the flat-plate-shaped display is composed of a plurality of light-emitting elements arranged in a grid pattern, a high-quality and clear aerial image can be displayed.

In the thin aerial image display device according to the first invention, when a center axis of light emitted from each of the light-emitting elements is perpendicular to a display surface of an image display means, an image displayed on the virtual image display means can be reproduced accurately by the flat-plate-shaped display, and an aerial image can be surely displayed on a predetermined image formation surface.

In the thin aerial image display device according to the first invention, when a directional angle of light emitted from each of the light-emitting elements is within 40 degrees, a bright and clear aerial image can be obtained.

In the thin aerial image display device according to the first invention, when the light-emitting elements are micro LEDs, a high-definition aerial image can be obtained and the thin aerial image display device is excellent in longevity and energy saving.

A non-contact input apparatus according to the second invention uses the thin aerial image display device including the flat-plate-shaped display that has the light-emitting surface parallel to the light entrance surface of the optical image formation means, thereby being capable of achieving extremely thin shape and excellent space saving and installation flexibility.

In the non-contact input apparatus according to the second invention, when a detector means is arranged in parallel to a lower side of the aerial image, the thin aerial image display device and the detector means are integrated to enable a simplified configuration to be achieved, which provides excellent space saving and mass productivity.

In the non-contact input apparatus according to the second invention, when the detector means includes a light-emitting portion that emits detection light in a direction parallel to the aerial image and forms a detection surface parallel to the aerial image, and a light-receiving portion that receives reflection light reflected from the indicator means when the indicator means touches the detection surface at a position overlapping the aerial image in a front view, there is no need to provide externally an additional light-emitting portion for emitting detection light, thereby enabling improved space saving and installation flexibility.

### BRIEF DESCRIPTION OF THE DRAWINGS

FIG. 1 is a perspective view showing a non-contact input apparatus using a thin aerial image display device according to one embodiment of the present invention.
FIG. 2 is a main-part cross-sectional side view showing the non-contact input apparatus.
FIG. 3 (A) and (B) are a front cross-sectional view and a side cross-sectional view showing working of an optical image formation means in the thin aerial image display device used in the non-contact input apparatus.
FIG. 4 is a schematic side view explaining image display by a flat-plate-shaped display in the non-contact input apparatus.

### DESCRIPTION OF EMBODIMENTS

Description will be made on a non-contact input apparatus using a thin aerial image display device according to one embodiment of the present invention, with reference to drawings.

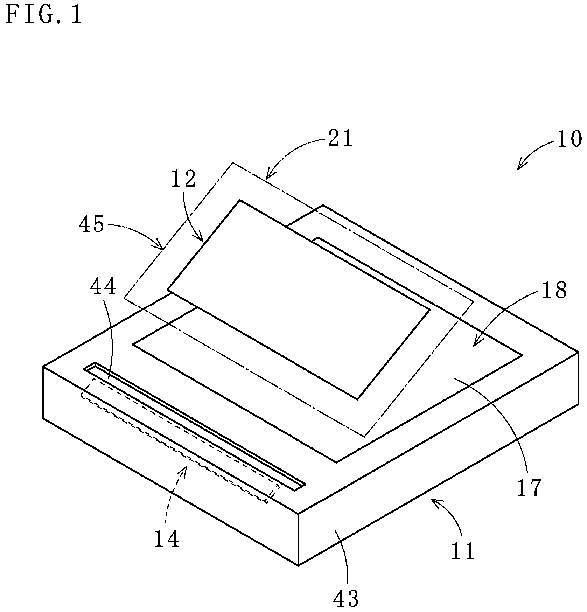

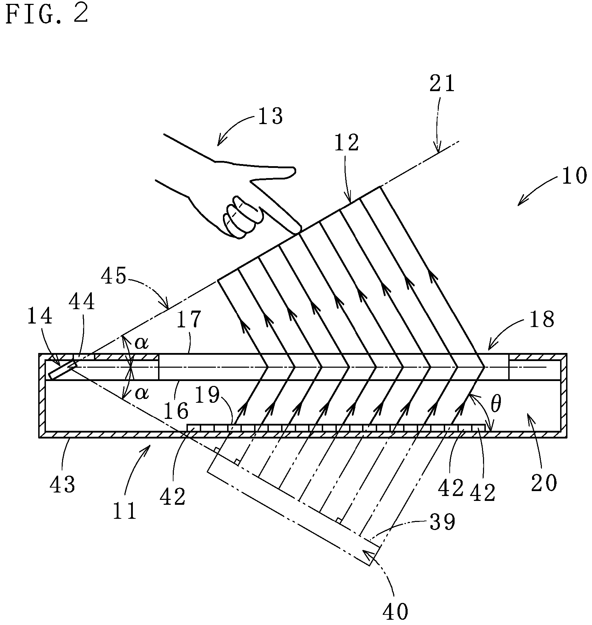

As shown in FIG. 1 and FIG. 2, a non-contact input apparatus 10 according to the one embodiment of the present invention includes a thin aerial image display device 11, and a detector means 14 that is attached to the thin aerial image display device 11 and detects a position of an indicator means 13, such as the fingers or a touch pen (here, the fingers), which touches an aerial image 12.

As shown in FIG. 2, the thin aerial image display device 11 includes: an optical image formation means 18 formed in a shape of a flat plate having a light entrance surface 16 and a light exit surface 17 that are arranged in parallel to each other; and a flat-plate-shaped display 20 arranged on a side of the light entrance surface 16 of the optical image formation means 18 and including a light-emitting surface 19 parallel to the light entrance surface 16. The thin aerial image display device displays the aerial image 12 on an image formation surface 21 which is inclined with respect to the light exit surface 17 at an angle α on a side of the light exit surface 17. Here, the angle α is preferably within a range of approximately 30 to 60 degrees, but is not limited to the range and selected as appropriate.

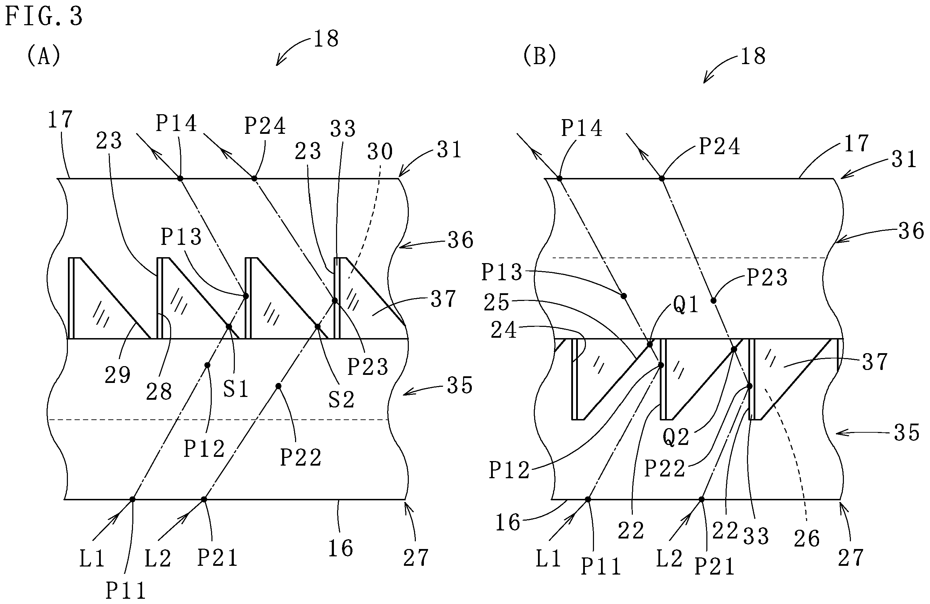

In addition, as shown in FIG. 3 (A) and (B), the optical image formation means 18 includes: a plurality of first light reflecting surfaces 22 formed at a right angle with respect to the light entrance surface 16 and arranged in parallel to each other at predetermined intervals; and a plurality of second light reflecting surfaces 23 formed at a right angle with respect to the light exit surface 17 and arranged in parallel to each other at predetermined intervals, and the first light reflecting surfaces 22 and the second light reflecting surfaces 23 are arranged orthogonally to each other in a planar view.

In manufacturing the optical image formation means 18, for example, a transparent resin is molded (for example, by an injection molding, a press molding, or a roll molding), and thereby, as shown in FIG. 3(A) and (B), a first molded body 27 and the second molded body 31 are manufactured. The first molded body 27 includes, on one surface side (here, on the upper side), a plurality of grooves 26 arranged in parallel to each other at predetermined intervals, the plurality of grooves 26 each having a trapezoidal cross-sectional shape widened and open on the one surface side, and each having one side surface as a vertical surface 24 and another side surface as an inclined surface 25. The second molded body 31 includes, on the other surface side (here, on the lower side), a plurality of grooves 30 arranged in parallel to each other at predetermined intervals, the plurality of grooves 30 each having a trapezoidal cross-sectional shape widened and open on the other surface side, and each having one side surface as a vertical surface 28 and another side surface as an inclined surface 29. The vertical surfaces 24 and 28 of the respective grooves 26 and 30 of the first molded body 27 and the second molded body 31 are covered with metal reflection films 33, and thereby a first light control section 35 including the plurality of first light reflecting surfaces 22 and a second light control section 36 including the plurality of second light reflecting surfaces 23 are formed.

The metal reflection films 33 reflect light in a specular manner (mirror reflection). The metal reflection films 33 are made from metal such as aluminum and can be applied by a method including sputtering, metal vapor deposition, spraying of metal microparticles, ion beam irradiation, or plating, to cover the vertical surfaces 24 and 28.

Then the respective grooves 26 of the first light control section 35 and the respective grooves 30 of the second light control section 36 are filled with transparent adhesive 37. Then, in the state where the grooves 26 and the grooves 30 face each other, the first light control section 35 and the second light control section 36 are stacked (overlapped) and bonded to each other in a thickness direction to be integrated such that the first light reflecting surfaces 22 and the second light reflecting surfaces 23 are orthogonal to each other in a planar view. As a result, the optical image formation means 18 can be obtained.

Next, description will be made on the working of the optical image formation means 18.

As shown in FIG. 3 (A) and (B), in the optical image formation means 18, among the light that is emitted from an object, not shown, and enters the first light control section 35 through the light entrance surface 16, light L1 and light L2, for example, enter the first light control section 35 respectively from positions P11 and P21, to be reflected once respectively at positions P12 and P22 on the first light reflecting surfaces 22 to enter the second light control section 36, and reflected once respectively at positions P13 and P23 on the second light reflecting surfaces 23, to be emitted into the air from the second control section 36 respectively at positions P14 and P24 on the light exit surface 17.

The light L1 and the light L2 enter the transparent adhesive 37 from the first molded body 27 at Q1 and Q2 in FIG. 3(B), and enter the second molded body 31 from the transparent adhesive 37 at S1and S2 in FIG. 3(A). However, since a refractive index η1 of the first molded body 27 and a refractive index η2 of the second molded body 31 are the same and approximate to (substantially equal to) a refractive index η3 of the transparent adhesive 37, an influence of refraction is extremely small and phenomena such as total reflection, spectral diffraction, and the like do not occur. Therefore, countless rays of light, which are emitted from the object and reflected once by the first light reflecting surfaces 22 of the optical image formation means 18 and successively reflected once by the second light reflecting surfaces 23 of the optical image formation means 18, are image-formed in the air, and thereby an aerial image (not shown) which is a real image of the object is formed at a position symmetrical to the object across the optical image formation means 18.

Note that the light L1 and the light L2 are refracted respectively at the positions P11 and P21 on the light entrance surface 16 and at the positions P14 and P24 on the light exit surface 17. However, the transparent resins (the first molded body 27 and the second molded body 31) that are base materials of the first light control section 35 and the second light control section 36 have the same refractive index and homogeneous quality, and all the light involved in forming of the aerial image, regardless of the light entering position and the light exiting position, are refracted on the light entrance surface 16 and the light exit surface 17 at a constant (same) angle, similarly to the light L1 and the light L2. Therefore, such refractions do not affect the image formation.

In addition, as shown in FIG. 3(A) and (B), although the left side surfaces of the metal reflection films 33 are formed as the first light reflecting surfaces 22 and the second light reflecting surfaces 23, both of the front and rear surfaces (left and right in FIG. 3(A) and (B)) of the metal reflection films 33 can function as the first light reflecting surfaces and the second light reflecting surfaces, and in accordance with the arrangement of the first light control section 35 and the second light control section 36 (reversal of the front and rear sides) or the entering direction of light, either the front surfaces or the rear surfaces of the metal reflection films 33 function as the first light reflecting surfaces and the second light reflecting surfaces.

According to the conventional aerial image display device configured by combining a display appliance such as a display with the optical image formation means 18, and the non-contact input apparatus using the conventional aerial image display device, in order to form an aerial image in an inclined manner (make the aerial image float) in a space above the optical image formation means 18, the display appliance has to be installed in an inclined manner below the optical image formation means 18, which has resulted in problems of an increase in the heights (thicknesses) of the aerial image display device and the non-contact input apparatus and lack of installation flexibility and ease of handling.

In contrast, according to the thin aerial image display device 11 shown in FIG. 1 and FIG. 2, when an image display means 40, which has a display surface 39 for displaying an image at a position symmetrical to the image formation surface 21 across the optical image formation means 18 (which is the position of the display appliance of the conventional aerial image display device), is virtually arranged on the side of the light entrance surface 16 of the optical image formation means 18, the thin aerial image display device 11 reproduces the light, which is emitted from the display surface 39 toward the light entrance surface 16 of the optical image formation means 18, by the flat-plate-shaped display 20 arranged on the side of the light entrance surface 16 of the optical image formation means 18 and including the light-emitting surface 19 parallel to the light entrance surface 16.

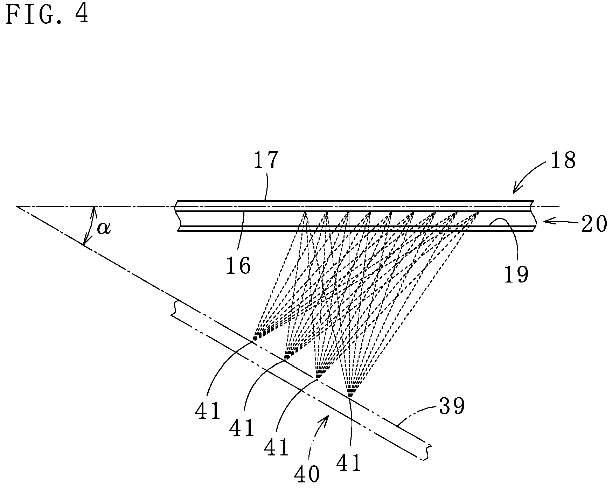

That is to say, as shown in FIG. 4, the flat-plate-shaped display 20 emits respective light from the light-emitting surface 19 toward the light entrance surface 16 of the optical image formation means 18, the respective light being included in a light flux which is emitted from a plurality of pixels 41 (here, four pixels are shown representatively) constituting the image displayed on the display surface 39 of the virtually arranged image display means 40 toward the light entrance surface 16 of the optical image formation means 18. The flat-plate-shaped display 20 pseudocondenses the light from the respective pixels 41, thereby be capable of reproducing the image displayed on the display surface 39. In other words, the image displayed on the display surface 39 of the image display means 40 is projected on the light-emitting surface 19 of the flat-plate-shaped display 20, and the image projected on the light-emitting surface 19 can be reconstructed by a plurality of light-emitting elements (not shown) arranged on the light-emitting surface 19 and displayed.

In FIG. 2, the light-emitting surface 19 of the flat-plate-shaped display 20 is composed of a plurality of light-emitting elements 42 arranged in a grid pattern (vertically and horizontally). As the light-emitting elements 42, micro LEDs are preferably used, but the light-emitting elements are not limited thereto. Elements that combine three colors of light R, G, B to display a color image are used as appropriate. The center axis of light emitted from each of the light-emitting elements 42 (rays of light indicated by the arrows in FIG. 2) are perpendicular to the display surface 39 of the image display means 40. Therefore, the angle θ that the center axis of the light emitted from each of the light-emitting elements 42 forms with the light-emitting surface 19 is represented by θ = 90 - α. Note that a directional angle of the light emitted from each of the light-emitting elements 42 is preferably within 40 degrees, but it is not limited thereto, and selected as appropriate.

Thus, instead of the conventional image display means 40, which has been arranged on the side of the light entrance surface 16 of the optical image formation means 18 so as to be inclined at the angle α, the flat-plate-shaped display 20 is arranged in parallel to the light entrance surface 16, thereby providing the thin aerial image display device 11. The thin aerial image display device 11 is capable of forming, on the image formation surface 21, the aerial image 12 corresponding to the image on the image display means 40, by the light reflected once by the first light reflecting surfaces 22 (see FIG. 3 (B)) and successively reflected once by the second light reflecting surfaces 23 (see FIG. 3 (A)) among the light emitted from the light-emitting surface 19 toward the light entrance surface 16 of the optical image formation means 18.

Next, description will be made on the detector means 14.

As shown in FIG. 1 and FIG. 2, the detector means 14 is arranged inside a housing 43 of the thin aerial image display device 11 so as to be in parallel to the lower side of the aerial image 12. On the top surface of the housing 43, an opening portion 44 parallel to the longitudinal direction of the detector means 14 is formed. The detector means 14 includes a light-emitting portion (not shown) and a light-receiving portion (not shown). The light-emitting portion emits detection light in a direction parallel to the aerial image 12 through the opening portion 44 and forms a detection surface 45 (coincident with the image formation surface 21 in the present embodiment) parallel to the aerial image 12. The light-receiving portion receives reflection light reflected from the indicator means 13 when the indicator means 13 touches the detection surface 45 at a position overlapping the aerial image 12 in a front view.

According to the above-described configuration, the aerial image 12 (that is, the image formation surface 21 and the detection surface 45) can be functioned as a non-contact input screen, and if a user indicates a predetermined position on the aerial image 12 with the indicator means 13 while viewing the aerial image 12, the predetermined position is detected by the detector means 14, and input of characters or predetermined action (command) is executed in accordance with the indicated position.

As the detector means 14, an optical sensor formed in a flat-bar shape (stripshape), such as zForce (registered trademark) AIR touch sensor or AIRBAR (registered trademark), is preferably used. Scanning the surface of the aerial image 12 (image formation surface 21) with the detection light such as laser light or infrared light emitted from the detector means 14 (light-emitting portion) enables the position of the indicator means 13 that indicates the aerial image 12 to be detected. Note that although the detector means 14 is housed in the housing 43 in the present embodiment, the detector means 14 can be installed on the external top surface of the housing 43 and the opening portion 44 can be omitted. In addition, the detector means 14 may be arranged in parallel to the aerial image 12 on either the left side or the right side of the aerial image 12. In this case, the detector means 14 is rotatably held by the housing 43, and placed on the top surface of the housing 43 when not in use, which provides excellent compactness. Note that the configuration of the detector means is not limited to the present embodiment, and may be any configuration as long as it can detect the position of the indicator means 13 that touches the aerial image 12. For example, a frame type sensor (a kind of optical proximity sensor) that is formed in a frame shape along the outer periphery of the aerial image 12 and has a plurality of light-emitting elements and a plurality of light-receiving elements that are arranged around the aerial image 12, an infrared motion sensor, or the like may be used as the detector means. Note that although the image formation surface 21 and the detection surface 45 are coincident in the present embodiment, the detection surface 45 may be arranged in parallel to the image formation surface 21 with a gap created in front of or behind the image formation surface 21.

Description has been made above on the embodiment of the present invention. However, the present invention is not limited to any of the configurations recited in the embodiment as described above, and may include other embodiments and modifications within a range of the subject matters recited in claims.

A method of integrating the first light control section and second light control section may include a method of inserting a sheet-like transparent resin having a lower melting point than the first molded body and the second molded body between the first light control section and the second light control section in the state where they are arranged to face each other such that one surface side of the first light control section and the other surface side of the second light control section, that is, the surfaces on the sides where the respective grooves are formed are opposed to each other, heating and pressing the resultant structure in a vacuum state, and melting and solidifying only the transparent resin. Alternatively, each of the grooves of the first light control section and the second light control section is separately filled with a transparent resin in a melting state and solidified, and the first light control section and the second first light control section, each are formed in a flat plate shape, can be bonded to each other with a transparent adhesive or the like. At this time, in addition to the configuration in which the one surface side of the first light control section and the other surface side of the second light control section are arranged to face each other to be bonded, another configuration may be employed in which the one surface side of the first light control section and the one surface side of the second light control section are arranged to face each other to be bonded or the other surface side of the first light control section and the one surface side of the second light control section are arranged to face each other to be bonded. Furthermore, instead of forming the first and second light control sections separately by the two molded bodies made of transparent resin and bonding these, the first and second light control sections may be formed respectively on both surfaces of the one molded body made of transparent resin.

Furthermore, in the above-described embodiment, description has been made on the optical image formation means configured such that the plurality of light reflecting surfaces of the first and second light control sections are respectively arranged linearly (in parallel). However, as the optical image formation means, the one including the first light control section including a plurality of light reflecting surfaces arranged radially and the second light control section including a plurality of light reflecting surfaces arranged concentrically may be used. In this case, the radially arranged light reflecting surfaces of the first light control section are provided linearly with a reference point X as a center, in contrast, the concentrically arranged light reflecting surfaces of the second light control section are curved along a concentric circle with a reference point Y overlapping the reference point X in a planar view, but these are orthogonal each other at the point where the light reflecting surfaces of the first and second light control sections intersect in a planar view. Therefore, an aerial image can be formed similarly to the above-described embodiment.

Furthermore, as the optical image formation means, the one as recited in the Japanese Patent No. 5437436 may be used, for example, in which the first and second light control sections, each of which includes a large number of strip-shaped reflecting surfaces formed (for example, at the same pitch) perpendicularly to one-side surface thereof, may be arranged overlapped such that the strip-shaped reflecting surfaces of the respective first and second light control sections are orthogonal to each other in a planar view.

Note that in the above-described embodiment, each of the grooves of the first and second molded bodies (first and second light control sections) is formed to have trapezoidal cross section. However, since the bottom surface portions of the grooves are not essential configurations for the optical image formation means, there is no need to strictly manage the dimension (width) of the bottom surface portions, and each of the grooves may be formed to have a triangular cross-sectional shape widened and open to one surface side or the other surface side, and have one side surface as a vertical surface and the other side surface as an inclined surface.

### INDUSTRIAL APPLICABILITY

The thin aerial image display device and the non-contact input apparatus using the same according to the present invention can form a clear aerial image, while being thinner than the conventional aerial image display device and the non-contact input apparatus, and are excellent in space saving and installation flexibility. Therefore, the thin aerial image display device and the non-contact input apparatus using the same can be installed at a place where it was difficult to install the conventional ones, which promotes replacement of contact input apparatuses with non-contact input apparatuses and enables spreading of non-contact input apparatuses to be promoted.

### REFERENCE SIGNS LIST

10: non-contact input apparatus, 11: thin aerial image display device, 12: aerial image, 13: indicator means, 14: detector means, 16: light entrance surface, 17: light exit surface, 18: optical image formation means, 19: light-emitting surface, 20: flat-plate-shaped display, 21: image formation surface, 22: first light reflecting surface, 23: second light reflecting surface, 24: vertical surface, 25: inclined surface, 26: groove, 27: first molded body, 28: vertical surface, 29: inclined surface, 30: groove, 31: second molded body, 33: metal reflection film, 35: first light control section, 36: second light control section, 37: transparent adhesive, 39: display surface, 40: image display means, 41: pixel, 42 light-emitting element, 43: housing, 44: opening portion, 45: detection surface

## Claims

1. A thin aerial image display device comprising:
an optical image formation means formed in a shape of a flat plate having a light entrance surface and a light exit surface that are arranged in parallel to each other, the optical image formation means including: a plurality of first light reflecting surfaces formed at a right angle with respect to the light entrance surface and arranged in parallel to each other at predetermined intervals; and a plurality of second light reflecting surfaces formed at a right angle with respect to the light exit surface and arranged in parallel to each other at predetermined intervals, the first light reflecting surfaces and the second light reflecting surfaces being arranged orthogonally to each other in a planar view, the thin aerial image display device having an image formation surface inclined with respect to the light exit surface at an angle α on a side of the light exit surface, wherein
when an image display means, which has a display surface for displaying an image at a position symmetrical to the image formation surface across the optical image formation means, is virtually arranged on a side of the light entrance surface of the optical image formation means, the thin aerial image display device reproduces light, which is emitted from the display surface toward the light entrance surface of the optical image formation means, by a flat-plate-shaped display arranged on the side of the light entrance surface of the optical image formation means and having a light-emitting surface parallel to the light entrance surface, and forms, on the image formation surface, an aerial image corresponding to the image by light reflected once by the first light reflecting surfaces and successively reflected once by the second light reflecting surfaces among light emitted from the light-emitting surface toward the light entrance surface of the optical image formation means.

2. The thin aerial image display device according to claim 1, wherein the light-emitting surface of the flat-plate-shaped display is composed of a plurality of light-emitting elements arranged in a grid pattern.

3. The thin aerial image display device according to claim 2, wherein a center axis of light emitted from each of the light-emitting elements is perpendicular to the display surface of the image display means.

4. The thin aerial image display device according to claim 2, wherein a directional angle of light emitted from each of the light-emitting elements is within 40 degrees.

5. The thin aerial image display device according to claim 2, wherein the light-emitting elements are micro LEDs.

6. A non-contact input apparatus using the thin aerial image display device according to any one of claims 1 to 5, comprising: the thin aerial image display device; and a detector means that is attached to the thin aerial image display device and detects a position of an indicator means that touches the aerial image.

7. The non-contact input apparatus according to claim 6, wherein the detector means is arranged in parallel to a lower side of the aerial image.

8. The non-contact input apparatus according to claim 7, wherein the detector means includes a light-emitting portion and a light-receiving portion, the light-emitting portion emitting detection light in a direction parallel to the aerial image and forming a detection surface parallel to the aerial image, the light-receiving portion receiving reflection light reflected from the indicator means when the indicator means touches the detection surface at a position overlapping the aerial image in a front view.
